# EUROPEAN PATENT SPECIFICATION

(11) **EP 2 808 493 B1**
(45) Date of publication and mention of the grant of the patent: **16.03.2016**
(21) Application number: 14170149.0
(22) Date of filing: 28.05.2014
(51) Int. Cl.: F01D 15/10, F02C 3/10, F02C 9/18

(54) **Two-shaft gas turbine**
Zweiwellen-Gasturbine
Turbine à gaz à deux arbres

(30) Priority: 28.05.2013 JP 2013111564
(43) Date of publication of application: 03.12.2014
(73) Proprietor: Mitsubishi Hitachi Power Systems, Ltd., Yokohama 220-8401 (JP)
(72) Inventor: Nanataki, Kenji, Kanagawa, 220-8401 (JP); Kuroki, Hidetoshi, Kanagawa, 220-8401 (JP)
(74) Representative: MERH-IP Matias Erny Reichl Hoffmann Patentanwälte PartG mbB

(56) References cited:
- EP-A2- 2 228 515
- EP-A2- 2 762 677
- US-A- 4 823 546
- US-A1- 2006 150 633

## Description

### BACKGROUND OF THE INVENTION

### 1. Field of the Invention

The present invention relates to a two-shaft gas turbine.

### 2. Description of the Related Art

Two-shaft gas turbines generally include a gas generator having a compressor, a combustor and a high-pressure turbine; and a low-pressure turbine (a power turbine) connected to load equipment. The low-pressure turbine has a rotating shaft that is not connected to a rotating shaft (a gas generator shaft) of the gas generator. In the gas generator, the compressed air generated by the compressor is burned together with fuel in the combustor to generate combustion gas. The thus-generated combustion gas drives the high-pressure turbine to provide the force to drive the compressor. The combustion gas used to drive the high-pressure turbine drives the low-pressure turbine which drives the load equipment (see JP-2010-25069-A).

US 2006/0150633 A1 describes that spool gas turbine engines are used to drive variable speed loads. Further it is described that a small motor/generator was added to the gas generator spool of the gas turbine engine in order to adjust the compressor speed and airflow to compensate for external load changes.

### SUMMARY OF THE INVENTION

Two-shaft gas turbines usually come into a rated operation state when the air quantity of a compressor (the flow rate of working fluid of a compressor) or the inlet temperature of a high-pressure turbine reaches a rated value. If atmospheric temperature is lower than a design temperature, the air quantity of the compressor generally reaches the rated value before the inlet temperature of the high-pressure turbine reaches the rated value. Also after the two-shaft gas turbine has shifted to rated operation, the inlet temperature of the high-pressure turbine does not rise up to the rated value. On the other hand, if atmospheric temperature is higher than a design temperature, the inlet temperature of the high-pressure turbine reaches the rated value before the air quantity of the compressor reaches the rated value. The air quantity does not rise up to the rated value during the rated operation. Therefore, under the condition that the atmospheric temperature is different from the design temperature, the performance lowers compared with that under the condition that atmospheric temperature is equal to the design temperature (under the condition that both the inlet temperature of the high-pressure turbine and the air quantity of the compressor reach the respective rated values).

On the other hand, the initial-stage stator vane of the low-pressure turbine is configured as a movable vane (a variable stator vane). The opening degree of the movable vane is adjusted, thereby making it possible to change the ratio of output (power) between the high-pressure turbine and the low-pressure turbine. In this case, the inlet temperature of the high-pressure turbine and the air quantity of the compressor can be increased to the respective rated values regardless of atmospheric temperature. However, the inlet temperature of the low-pressure turbine is raised as combustion temperature has recently been raised. This leads to a necessity to configure the initial-stage stator vane of the low-pressure turbine as a cooled vane. Thus, it becomes difficult to configure the initial-stage stator vane of the low-pressure turbine as a movable vane.

The present invention has been made in the above situations and aims to provide a two-shaft gas turbine that can raise an inlet temperature of a high-pressure turbine and the air quantity of a compressor to respective rated values at any atmospheric temperature without using a variable stator vane in the initial stage of a low-pressure turbine.

The above-described objects are achieved by the invention according to the independent claims. The dependent claims describe further preferred developments. According to an aspect of the present invention, there is provided a two-shaft gas turbine including: a gas generator having a compressor, a combustor and a high-pressure turbine; a fixed-vane low-pressure turbine driven by exhaust gas from the high-pressure turbine; a load adjustor connected to the gas generator; and/or a control unit, when either one of a value of inlet temperature of the high-pressure turbine and a values of an air quantity of the compressor reaches a rated value before the other value reaches a rated value, for driving the load adjustor to bring the other value close to the rated value.

The present invention can change a rotor vane balance between the high-pressure turbine and the low-pressure turbine without using a variable stator vane in the initial stage of the low-pressure turbine and can raise the inlet temperature of the high-pressure turbine and the air quantity of the compressor to respective rated values at any atmospheric temperature.

### BRIEF DESCRIPTION OF THE DRAWINGS

Fig. 1 is a configuration diagram of a two-shaft gas turbine according to a first embodiment of the present invention.
Fig. 2 is a flowchart illustrating a procedure for controlling a generator motor by a control unit installed in the two-shaft gas turbine according to the first embodiment of the present invention.
Fig. 3 shows atmospheric temperature characteristics of the output (power) of the two-shaft gas turbine according to the first embodiment of the present invention.
Fig. 4 shows another example of the atmospheric temperature characteristics of the output (power) of the two-shaft gas turbine according to the first embodiment of the present invention.
Fig. 5 is a configuration diagram of a two-shaft gas turbine according to a second embodiment of the present invention, corresponding to Fig. 1.
Fig. 6 is a configuration diagram of a two-shaft gas turbine according to a third embodiment of the present invention, corresponding to Fig. 1.
Fig. 7 is a configuration diagram of a two-shaft gas turbine according to a fourth embodiment of the present invention, corresponding to Fig. 1.

### DESCRIPTION OF THE PREFERRED EMBODIMENTS

Preferred embodiments of the present invention will hereinafter be described with reference to the drawings.

### [First Embodiment]

### 1. Two-shaft gas turbine

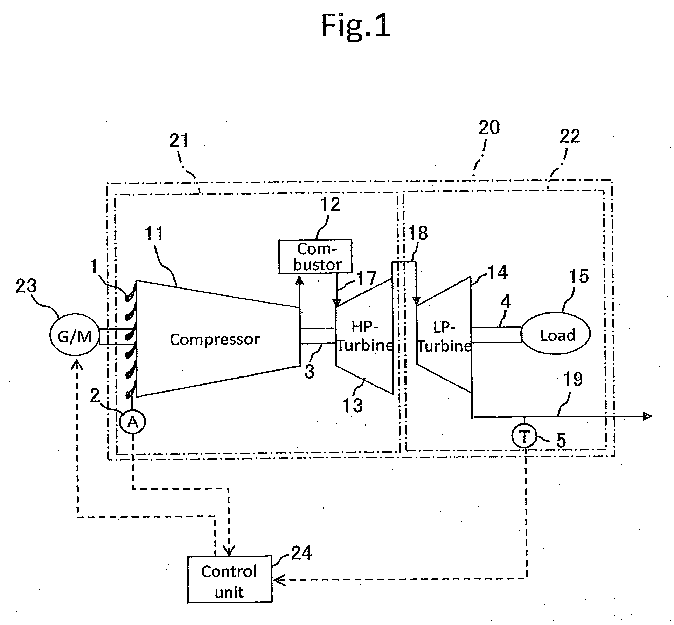

Fig. 1 is a configuration diagram of a two-shaft gas turbine according to a first embodiment of the present invention.

A two-shaft gas turbine 20 illustrated in Fig. 1 includes a gas generator 21, a power turbine 22, a generator motor 23 and a control unit 24.

### (1) Gas generator

The gas generator 21 includes, as main elements, a compressor 11, a combustor 12 and a high-pressure turbine 13. The compressor 11 compresses air taken in from the atmosphere to generate compressed air. IGV (inlet guide vane) 1 is installed at the inlet (air inlet port) of the compressor 11. The IGV 1 is driven by an IGV drive device (not shown) to adjust the opening degree of the IGV 1, thereby changing the amount of air taken into the compressor 11. The IGV 1 is provided with an angle detector 2 which detects the angle of the vane (the opening degree of the IGV 1). The combustor 12 mixes the compressed air from the compressor 11 with fuel and burns it to generate combustion gas 17. The high-pressure turbine 13 is connected to the compressor 11 via a gas generator shaft 3 serving concurrently as a rotor of the high-pressure turbine 13. In this way, the rotative power obtained by the combustion gas 17 from the combustor 12 is transmitted to the compressor 11.

Incidentally, for example, if load equipment 15 connected to the power turbine 22 is a generator, the opening degree of the IGV 1 is controlled by the control unit 24 (or another control unit) according to a predetermined program on the basis of an electric generation output command (Mega Watt Demand: MWD) from an upper control unit (not shown), the output of the low-pressure turbine 14 (the electric generation output of the load equipment 15), the rotative speed of the low-pressure turbine 14, etc.

### (2) Power turbine

The power turbine 22 includes, as main elements, the low-pressure turbine 14 and the load equipment 15. The low-pressure turbine 14 and the load equipment 15 are connected via a power turbine shaft 4 serving concurrently as the rotor of the low-pressure turbine 14. The low-pressure turbine 14 is a fixed-vane low-pressure turbine which uses non-movable fixed vanes as the stator vanes of the full stages. The combustion gas that has driven the high-pressure turbine 13 to reduce in pressure is delivered from the high-pressure turbine 13 to the low-pressure turbine 14 as combustion gas 18 to drive the low-pressure turbine 14. The rotative power obtained by the low-pressure turbine 14 is transmitted to the load equipment 15 to drive the load equipment 15. The load equipment 15 is typically a generator; however, a pump or the like is applicable. The combustion gas that has driven the low-pressure turbine 14 is discharged as exhaust gas 19. A thermometer 5 for measuring the temperature of the exhaust gas 19 is attached to an exhaust duct line of the low-pressure turbine 14.

### (3) Generator motor

The generator motor 23 plays a role of a load adjustor for adjusting a load on the gas generator 21. The generator motor 23 is connected to the compressor 11 of the gas generator 21 via the gas generator shaft 3. For example, an inverter may be used as the generator motor 23.

### (4) Control unit

The control unit 24 implements a procedure for controlling the generator motor 23 to adjust a ratio of a load (power) between the high-pressure turbine 13 and the low-pressure turbine 14. Specifically, if any one of a value of the inlet temperature of the high-pressure turbine 13 and a value of the air quantity (the flow rate of working fluid) of the compressor 11 reaches a rated value before the other value reaches a rated value, the control unit 24 fulfills a function of driving the generator motor 23 to bring the other value close to the rated value. The rated value is a value at which the operating state of the two-shaft gas turbine 20 becomes rated operation when the inlet temperature of the high-pressure turbine 13 or the air quantity of the compressor 11 reaches such a value. The rated value is set for each of the inlet temperature of the high-pressure turbine 13 and the air quantity of the compressor 11. The rated value can be set at a particular value for each of the inlet temperature of the high-pressure turbine 13 and the air quantity of the compressor 11. However, the rated value can be set as a predetermined range (values having an upper limit value and a lower limit value).

For example, if the air quantity of the compressor 11 reaches the rated value, the control unit 24 issues a power generation command to the generator motor 23 (for example, a load current is transmitted to the generator motor 23 to apply a power generation load to the generator motor 23) to drive the generator motor 23 as a generator. A value by which a difference between the inlet temperature of the high-pressure turbine 13 and the rated value thereof is reduced is calculated and issued as a power generation command value transmitted to the generator motor 23. On the other hand, if the inlet temperature of the high-pressure turbine 13 reaches the rated value, the control unit 24 issues a power command to the generator motor 23 (by supplying drive power to the generator motor 23) to drive the generator motor 23 as an electric motor. As a power command value transmitted to the generator motor 23, a value by which a difference between the air quantity of the compressor 11 and the rated value thereof is reduced is calculated and issued. If the inlet temperature of the high-pressure turbine 13 and the air quantity of the compressor 11 simultaneously reach their respective rated values, then the generator motor 23 is operated with no-load (runs idle). If the generator motor 23 is connected to the gas generator shaft 3 via a clutch, the generator motor 23 may be disconnected from the gas generator shaft 3 in place of the no-load operation.

Incidentally, in the present embodiment, the air quantity of the compressor 11 is calculated by the control unit 24 on the basis of the detection signal (the opening degree of the IGV 1) of the angle detector 2. In addition, a state where the IGV 1 is fully opened (or is opened at a set opening degree or more) shall correspond to a rated air quantity. However, the calculation of the air quantity is not limited to this. Other methods may be employed in which, for example, an air flow meter is installed at the inlet of the compressor 11 and the air quantity is calculated from the inlet flow. On the other hand, the inlet temperature of the high-pressure turbine 13 can be calculated by the control unit 24 on the basis of e.g. the measurement value of the thermometer 5 (the temperature of the exhaust gas 19 of the low-pressure turbine 14). However, the calculation of the inlet temperature of the high-pressure turbine 13 is not limited to this. If possible, other measurement methods may be employed in which, for example, a thermometer is installed at the inlet of the high-pressure turbine 13 for direct measurement.

### 2. Operation

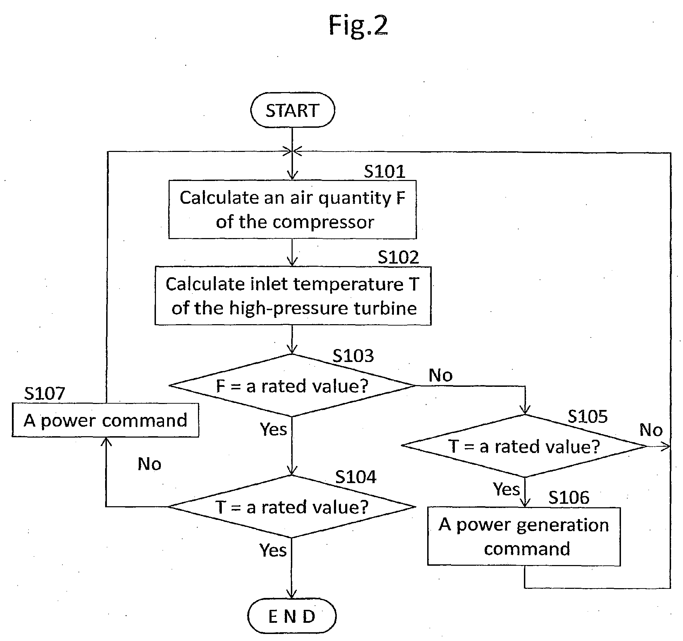

Fig. 2 is a flowchart illustrating a procedure for controlling the generator motor 23 by the control unit 24.

After the start of the start-up operation of the two-shaft gas turbine 20, the control unit 24 calculates the air quantity F of the compressor 11 and the temperature T at the inlet of the high-pressure turbine 13 (steps S101 and S102). The order of steps S101 and S102 may be inverted. Subsequently, the control unit 24 determines whether or not the air quantity F reaches the rated value (step S103) and whether or not the temperature T reaches the rated value (steps S104 and S105). The order of the determinations relating to the air quantity F and the temperature T may be inverted.

As a result of the determinations in step S103 and other steps, if it is determined that both the air quantity F and the temperature T do not reach the respective rated values, the control unit 24 returns the procedure to step S101 and recalculates the air quantity F and the temperature T (steps S103 → S105 → S101).

As a result of the determinations in steps S103 and S105, if it is determined that only the temperature T reaches the rated value before the air quantity F reaches the rated value, the control unit 24 issues the power generation command to the generator motor 23 (step S106) and then returns the procedure to step S101 (steps S103 → S105 → S106 → S101). As a result of the determinations in steps S103 and step 104, if it is determined that only the air quantity F reaches the rated value before the temperature T reaches the rated value, then the control unit 24 issues the power command to the generator motor 23 (step S107) and then returns the procedure to step S101 (steps S103 → S104 → S107 → S101).

As a result of the execution of the above control procedure, if both the air quantity F and the temperature T reach the respective rated values, then the control unit 24 ends the control procedure in Fig. 2 (steps S101 → S102 → S103 → S104 → END). In this way, the start-up operation is completed and the two-shaft gas turbine 20 shifts to the rated operation state.

### 3. Effects

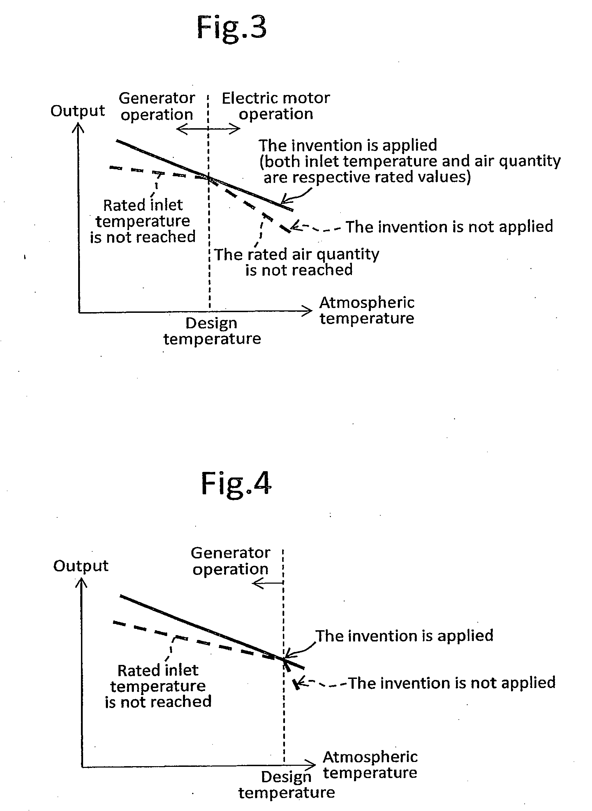

Fig. 3 shows the atmospheric temperature characteristics of the output (power) of the two-shaft gas turbine according to the present embodiment. A solid line in the figure represents atmospheric temperature characteristics in a case where the present invention is applied (where the generator motor 23 is controlled as in Fig. 2). In addition, a dotted line represents atmospheric temperature characteristics in a case where the present invention is not applied (for example, where the generator motor 23 is not connected to the gas generator 21).

As shown in the figure, the two-shaft gas turbine 20 is designed so that both the inlet temperature of the high-pressure turbine and the air quantity of the compressor may reach respective rated values under a design temperature (a particular atmospheric temperature) regardless of the presence or absence of the generator motor 23. If the generator motor 23 is not used, under the condition that the atmospheric temperature is lower than the design temperature, the air quantity reaches the rated value in the state where the inlet temperature does not reach the rated value, and the two-shaft gas turbine 20 shifts to the rated operation. Thus, also after the two-shaft gas turbine 20 shifts to the rated operation, the air quantity remains lower than the rated value. On the other hand, under the condition that the atmospheric temperature is higher than the design temperature, the inlet temperature reaches the rated value in the state where the air quantity does not reach the rated value, and the two-shaft gas turbine 20 shifts to the rated operation. Also after the two-shaft gas turbine 20 shifts to the rated operation, the inlet temperature remains lower than the rated value. Thus, under the condition that the atmospheric temperature is different from the design temperature, the performance of the two-shaft gas turbine 20 lowers compared with that under the condition of the design temperature.

In contrast, if the generator motor 23 is controlled as described with Fig. 2, the generator motor 23 is driven as a generator to give a load to the high-pressure turbine 13 under the condition that the atmospheric temperature is lower than the design temperature. If the load is given to the high-pressure turbine 13, the compressor air quantity which balances with the same inlet temperature of the high-pressure turbine is reduced. In other words, the inlet temperature of the high-pressure turbine which balances with the same air quantity of the compressor is raised. Thus, even under the condition that the atmospheric temperature is lower than the design temperature, the inlet temperature of the high-pressure turbine can be raised to the rated value as shown in Fig. 3. Consequently, both the inlet temperature of the high-pressure turbine and the air quantity of the compressor can reach the respective rated values even during the rated operation.

On the other hand, under the condition that the atmospheric temperature is higher than the design temperature, the generator motor 23 is driven as an electric motor to give power to the high-pressure turbine 13. If the power is given to the high-pressure turbine 13, the compressor air quantity which balances with the same inlet temperature of the high-pressure turbine is increased. Thus, even under the condition that the atmospheric temperature is higher than the design temperature, the air quantity of the compressor can be increased to the rated value as shown in Fig. 3. Consequently, both the inlet temperature of the high-pressure turbine and the air quantity of the compressor can reach the respective rated values during the rated operation.

In this way, both the inlet temperature of the high-pressure turbine 13 and the air quantity of the compressor 11 can be increased to their respective rated values at any atmospheric temperature without using variable stator vanes for the initial stage of the low-pressure turbine 14. Thus, the atmospheric temperature characteristics can be improved.

The rotative speed of the gas generator 21 is not always constant. However, the use of an inverter as the generator motor 23 can flexibly deal with a variation in the rotative speed of the gas generator 21.

### 4. Others

The present embodiment describes the exemplification in which the generator motor 23 is used as a load adjustor to deal with both the cases where the atmospheric temperature is lower and higher than the design temperature. However, it is also conceivably configured to deal with the case where the atmospheric temperature is either lower or higher than the design temperature. In this case, a generator or an electric motor can be used in place of the generator motor 23.

For example, if a generator specifically for electric generation is connected to the gas generator 21, it is designed so that the control unit 24 may issue a power generation command to the generator when the compressor 11 reaches the rated air quantity. In this way, the inlet temperature of the high-pressure turbine can be raised to the rated value under the conditions that the inlet temperature of the high-pressure turbine does not usually reach the rated value during the rated operation. In this case, if the atmospheric temperature is higher than the design temperature, the air quantity of the compressor cannot be increased. However, as shown in Fig. 4, a design temperature is set close to an upper limit of a temperature range of the atmospheric temperature assumed at the installation place of the two-shaft gas turbine 20. Thus, such an effect can be produced at many places. If a generator is used, installation costs can be reduced compared with the case of using the generator motor 23.

For example, if an electric motor specifically for power-assist is connected to the gas generator 21, the control unit 24 issues a power command to the electric motor when the inlet temperature of the high-pressure turbine reaches the rated value. In this way, the air quantity of the compressor can be increased to the rated value under the condition that the air quantity of the compressor does not usually reach the rated value during the rated operation. In this case, if the atmospheric temperature is lower than the design temperature, the inlet temperature of the high-pressure turbine cannot be raised. However, a design temperature is set close to a lower limit of the temperature range of the atmospheric temperature assumed at the installation place of the two-shaft gas turbine 20. Thus, such an effect can be produced at many places. If the electric motor is used, installation costs can be reduced compared with the case of using the generator motor 23. If the small capacity of the electric motor suffices, the electric motor can be replaced with a starting device used generally to start up the gas generator 21. In this case, the two-shaft gas turbine 20 can be configured more inexpensively. In addition, such a configuration is advantageous to an installation space and maintenance performance.

### [Second Embodiment]

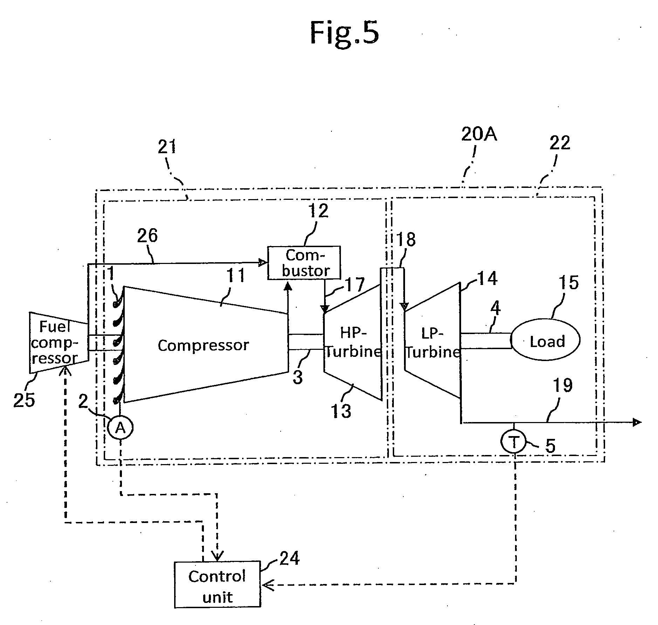

Fig. 5 is a configuration diagram of a two-shaft gas turbine according to a second embodiment of the present invention. In addition, Fig. 5 corresponds to Fig. 1. The elements that have been explained are denoted by the same reference symbols as those in the previous figures and their explanations are omitted.

As illustrated in Fig. 5, a two-shaft gas turbine 20A according to the present embodiment is different from the two-shaft gas turbine 20 according to the first embodiment in that a fuel compressor 25 as a load adjustor in place of the generator motor 23 is connected to the gas generator 21. The fuel compressor 25 compresses fuel gas and supplies the compressed fuel gas 26 to the combustor 12. In addition, the fuel compressor 25 is connected to the compressor 11 via the gas generator shaft 3. If the working fluid of the compressor 11 reaches a rated flow (for example, if the IGV 1 is fully opened or is opened at a set opening degree or more), the control unit 24 drives the fuel compressor 25 to start the application of a load to the gas generator 21. In this way, even under the condition that atmospheric temperature is lower than a design temperature, both the inlet temperature of the high-pressure turbine 13 and the air quantity of the compressor 11 can be increased to respective rated values without using variable stator vanes for the initial stage of the low-pressure turbine 14. Thus, atmospheric temperature characteristics can be improved. The other configurations are the same as those of the first embodiment.

Incidentally, in the configuration of the present embodiment, if the atmospheric temperature is higher than the design temperature, the air quantity of the compressor cannot be increased. However, as previously shown in Fig. 4, the design temperature is set close to the upper limit of the temperature range of the atmospheric temperature assumed at the installation place of the two-shaft gas turbine 20A. Thus, such an effect can be produced at many places.

### [Third Embodiment]

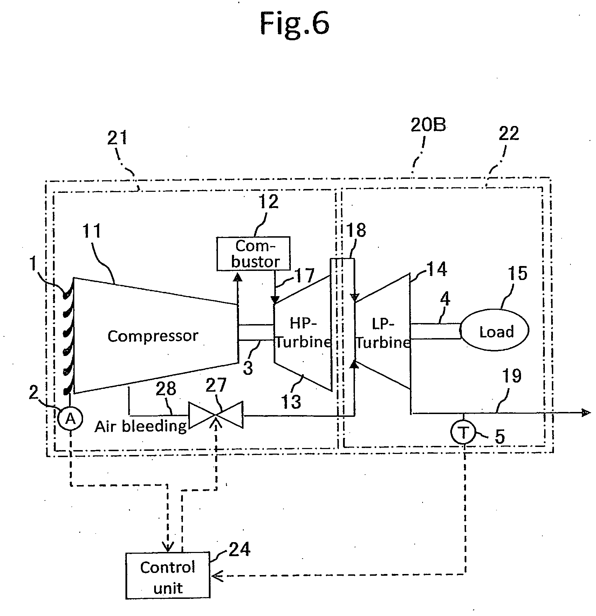

Fig. 6 is a configuration diagram of a two-shaft gas turbine according to a third embodiment of the present invention. In addition, Fig. 6 corresponds to Fig. 1. The elements that have been explained are denoted by the same reference symbols as those in the previous figures and their explanations are omitted.

As illustrated in Fig. 6, a two-shaft gas turbine 20B according to the present embodiment is different from the two-shaft gas turbine 20 according to the first embodiment in that a bleed airflow adjustment valve 27 is installed as a load adjustor in place of the generator motor 23. The bleed airflow adjustment valve 27 is installed in a bleeding pipe line 28 which bleeds compressed air from the compressor 11. The bleeding pipe line 28 connects, for example, an intermediate stage of the compressor 11 with an inlet portion of the low-pressure turbine 14. In the present embodiment, if the air quantity of the compressor 11 reaches a rated value, the control unit 24 increases the opening degree of the bleed airflow adjustment valve 27 to increase a cooling air flow to the initial-stage stator vanes of the low-pressure turbine 14. The other points are the same as those of the first embodiment.

If the cooling air flow (the amount of bleed air) is increased, combustion temperature is raised even at the same air quantity of the compressor to raise the inlet temperature of the high-pressure turbine. Therefore, under the condition that atmospheric temperature is lower than the design temperature, the cooling air flow is increased, thereby raising the inlet temperature of the high-pressure turbine to the rated value. Thus, the performance of the two-shaft gas turbine 20B can be improved. If the cooling air flow is increased, efficiency is lowered by the reduced flow of the working fluid. However, if the improved performance resulting from the raised combustion temperature exceeds the lowered performance resulting from the increased cooling air flow, the performance is improved.

Incidentally, the present embodiment is configured so as to raise the inlet temperature of the high-pressure turbine basically when the atmospheric temperature is lower than the design temperature. However, in the case of increasing the air quantity of the compressor, for example, if the atmospheric temperature is higher than the design temperature, also a configuration may be conceivable in which the opening degree of the bleed airflow adjustment valve 27 is lowered to reduce the cooling air flow. This case can deal with both the cases where the atmospheric temperature is higher and lower than the design temperature.

The causes of a rise in combustion temperature encountered when the cooling air flow is increased are three points as follows.
(1) A reduction in combustion air flow
(2) The lowered output power of the high-pressure turbine due to a reduction in the flow of the combustion gas to the high-pressure turbine
(3) A variation in the balance at and after the outlet of the high-pressure turbine due to the inflow of the cooling air

Therefore, the front side of the initial stage of the low-pressure turbine 14 is most effective as the inflow position of cooling air as described earlier.

### [Fourth Embodiment]

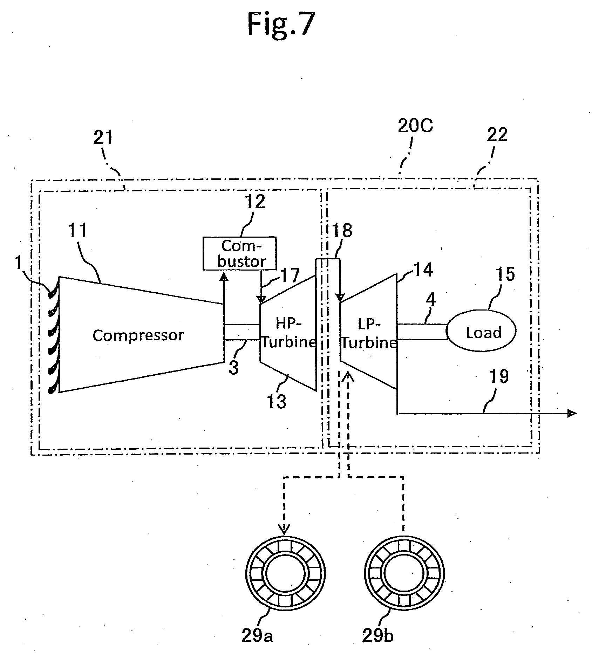

Fig. 7 is a configuration diagram of a two-shaft gas turbine according to a fourth embodiment of the present invention. In addition, Fig. 7 corresponds to Fig. 1. The elements that have been explained are denoted by the same reference symbols as those in the previous figures and their explanations are omitted.

As illustrated in Fig. 7, a two-shaft gas turbine 20C according to the present embodiment is different from the two-shaft gas turbine 20 according to the first embodiment in that an initial-stage stator vane 29a of the low-pressure turbine 14 is replaced with an initial-stage stator vane 29b. This initial-stage stator vane 29b is such that the outlet angle of its vane portion is designed so that both the air quantity of the compressor and the inlet temperature of the high-pressure turbine may reach respective rated values at an installation place. The generator motor 23 (see Fig. 1) or the bleed airflow adjustment valve 27 (see Fig. 6) may be provided for the gas generator 21 or may be omitted. The initial-stage stator vane 29b is a fixed stator vane that is designed in consideration of the power distribution between the high-pressure turbine 13 and the low-pressure turbine 14 so that when the air quantity of the compressor 11 reaches the rated value, also the inlet temperature of the high-pressure turbine may reach the rated value on the basis of a reference value (an assumed value) of the atmospheric temperature in the installation place of the two-shaft gas turbine 20C. The use of the initial-stage stator vane 29a may not bring the inlet temperature of the high-pressure turbine to the rated value when the air quantity of the compressor 11 reaches the rated value. In such a case, the initial-stage stator vane 29b is attached to the initial stage of the low-pressure turbine 14 for operation. In this way, the two-shaft gas turbine 20C is such that the inlet temperature of the high-pressure turbine reaches the rated value when the air quantity of the compressor reaches the rated value.

If the throat area of the initial-stage stator vane 29b of the low-pressure turbine 14 is increased, the output power of the high-pressure turbine is increased. Therefore, even if the inlet temperature of the high-pressure turbine is the same, the air quantity of the compressor is increased compared with the case where the throat area is small. If the two-shaft gas turbine 20C is operated in a relatively high atmospheric temperature area, therefore, the turbine initial-stage stator vane 29b having a large throat area is used to improve performance. On the other hand, if the throat area of the initial-stage stator vane 29b of the low-pressure turbine 14 is reduced, the output power of the high-pressure turbine is reduced. Therefore, the air quantity of the compressor is reduced compared with the case where the throat area is large, even at the same inlet temperature of the high-pressure turbine. This means that the inlet temperature of the high-pressure turbine balanced with the same air quantity of the compressor is increased. Thus, to operate the two-shaft gas turbine 20C in a relatively low atmospheric temperature area, the turbine initial-stage stator vane 29b having a small throat area is used, thereby improving the performance.

In this way, a plurality of the initial-stage stator vanes 29b having different throat areas in the low-pressure turbine 14 are differently used depending on installation places. The inlet temperature of the high-pressure turbine and the air quantity of the compressor can be made to reach the respective rated values. Thus, the performance can be improved.

### [Others]

Even if the embodiments are individually implemented, the effects can be produced. However, a plurality of the embodiments can be combined for implementation. The configuration exemplified in each of the embodiments is just a typical example. The present invention can be modified in various ways while not departing from the scope of the appended claims. For example, the case where the present invention is applied to the two-shaft gas turbine of an axial-flow type is exemplified for description. However, the present invention can be applied to, for example, two-shaft gas turbines of a centrifugal type. However, the centrifugal type two-shaft gas turbine does not generally use the IGV. In addition, the air quantity of the compressor depends on the rotative speed of the compressor. Thus, whether or not the air quantity of the compressor reaches the rated value is determined in the following manner. For example, a rotative speed detector is installed on the compressor. The control unit can determine whether or not the rotative speed of the compressor reaches the rated value by a detection signal of the rotative speed detector.

## Claims

1. A two-shaft gas turbine comprising:
a gas generator (21) having a compressor (11), a combustor (12) and a high-pressure turbine (13);
a fixed-vane low-pressure turbine driven by exhaust gas from the high-pressure turbine (13); and
a load adjustor connected to the gas generator (21); **characterized by**
a control unit (24), when either one of a value of inlet temperature of the high-pressure turbine (13) and a value of an air quantity of the compressor (11) reaches a rated value before the other value reaches a rated value, adapted to drive the load adjustor to bring the other value close to the rated value in such a way that both the inlet temperature of the high-pressure turbine (13) and the air quantity of the compressor (11) reach the respective rated values even during rated operation.

2. The two-shaft gas turbine according to claim 1,
wherein the load adjustor is a generator, and
the control unit. (24) issues a power generation command to the generator if the air quantity of the compressor (11) reaches the rated value.

3. The two-shaft gas turbine according to claim 1,
wherein the load adjustor is a fuel compressor (25), and
the control unit (24) drives the fuel compressor (25) if the air quantity of the compressor (11) reaches the rated value.

4. The two-shaft gas turbine according to claim 1,
wherein the load adjustor is a bleed airflow adjustment valve (27) installed in a bleeding pipe line (28) which bleeds compressed air from the compressor (11), and
the control unit (24) increases the opening degree of the bleed airflow adjustment valve (27) when the air quantity of the compressor (11) reaches the rated value.

5. The two-shaft gas turbine according to claim 4,
wherein the bleeding pipe line (28) is connected to an inlet portion of the low-pressure turbine (14).

6. The two-shaft gas turbine according to claim 1,
wherein the load adjustor is an electric motor, and
the control unit (24) issues a power command to the electric motor if the inlet temperature of the high-pressure turbine (13) reaches the rated value.

7. The two-shaft gas turbine according to claim 6,
wherein a starting electric motor serves also as the electric motor.

8. The two-shaft gas turbine according to claim 1,
wherein the load adjustor is a generator motor (23), and
the control unit (24) issues a power generation command to the generator motor (23) when the air quantity of the compressor (11) reaches the rated value and issues a power command to the generator motor (23) when the inlet temperature of the high-pressure turbine (13) reaches the rated value.

9. The two-shaft gas turbine according to claim 8,
wherein an inverter is used as the generator motor (23).

10. The two-shaft gas turbine according to any one of claims 2 to 9, further comprising:
an inlet guide vane (1) installed at an inlet of the compressor (11);
wherein the control unit (24) calculates the air quantity on the basis of the opening degree of the inlet guide vane (1).

11. The two-shaft gas turbine according to any one of claims 2 to 9, further comprising:
a thermometer (5) for measuring the temperature of exhaust gas of the low-pressure turbine (14);
wherein the control unit (24) calculates inlet temperature of the high-pressure turbine (13) on the basis of a measurement value of the thermometer (5).

12. A method for operating a two-shaft gas turbine, the two-shaft gas turbine including a gas generator (21) having a compressor (11), a combustor (12) and a high-pressure turbine (13), and a fixed-vane low-pressure turbine driven by exhaust gas from the high-pressure turbine (13),
wherein, when either one of a value of inlet temperature of the high-pressure turbine(13) and a value of an air quantity of the compressor (11) reaches a rated value before the other value reaches a rated value, a load on the gas generator (21) is adjusted to bring the other value close to the rated value in such a way that both the inlet temperature of the high-pressure turbine (13) and the air quantity of the compressor (11) reach the respective rated values even during rated operation.

## Patentansprüche

1. Zweiwellen-Gasturbine, die Folgendes umfasst:
einen Gasgenerator (21), der einen Verdichter (11), eine Brennkammer (12) und eine Hochdruckturbine (13) aufweist;
eine Niederdruckturbine mit festen Schaufeln, die durch das Abgas der Hochdruckturbine (13) angetrieben wird; und
eine Lasteinstellvorrichtung, die mit dem Gasgenerator (21) verbunden ist;
**gekennzeichnet durch**
eine Steuereinheit (24), die dafür ausgelegt ist, dann, wenn entweder ein Wert der Einlasstemperatur der Hochdruckturbine (13) oder ein Wert einer Luftmenge des Verdichters (11) einen Nennwert erreicht, bevor der andere Wert einen Nennwert erreicht, die Lasteinstellvorrichtung anzusteuern, um den anderen Wert derart in die Nähe des Nennwerts zu bringen, dass sowohl die Einlasstemperatur der Hochdruckturbine (13) als auch die Luftmenge des Verdichters (11) bei Nennbetrieb den jeweiligen Nennwert gleichmäßig erreichen.

2. Zweiwellen-Gasturbine nach Anspruch 1,
wobei die Lasteinstellvorrichtung ein Generator ist, und
die Steuereinheit (24) an den Generator einen Leistungserzeugungsbefehl ausgibt, wenn die Luftmenge des Verdichters (11) den Nennwert erreicht.

3. Zweiwellen-Gasturbine nach Anspruch 1,
wobei die Lasteinstellvorrichtung ein Brennstoffverdichter (25) ist, und
die Steuereinheit (24) den Brennstoffverdichter (25) ansteuert, wenn die Luftmenge des Verdichters (11) den Nennwert erreicht.

4. Zweiwellen-Gasturbine nach Anspruch 1,
wobei die Lasteinstellvorrichtung ein Ablassluftstromregelventil (27) ist, das in einer Ablassrohrleitung (28) montiert ist, die verdichtete Luft aus dem Verdichter (11) abbläst, und
die Steuereinheit (24) den Öffnungsgrad des Ablassluftstromregelventils (27) vergrößert, wenn die Luftmenge des Verdichters (11) den Nennwert erreicht.

5. Zweiwellen-Gasturbine nach Anspruch 4, wobei die Ablassrohrleitung (28) mit einem Einlassabschnitt der Niederdruckturbine (14) verbunden ist.

6. Zweiwellen-Gasturbine nach Anspruch 1,
wobei die Lasteinstellvorrichtung ein Elektromotor ist, und
die Steuereinheit (24) an den Elektromotor einen Leistungsbefehl ausgibt, wenn die Einlasstemperatur der Hochdruckturbine (13) den Nennwert erreicht.

7. Zweiwellen-Gasturbine nach Anspruch 6, wobei ein elektrischer Anlassermotor auch als der Elektromotor fungiert.

8. Zweiwellen-Gasturbine nach Anspruch 1,
wobei die Lasteinstellvorrichtung ein Generatormotor (23) ist, und
die Steuereinheit (24) an den Generatormotor (23) einen Leistungserzeugungsbefehl ausgibt, wenn die Luftmenge des Verdichters (11) den Nennwert erreicht, und an den Generatormotor (23) einen Leistungsbefehl ausgibt, wenn die Einlasstemperatur der Hochdruckturbine den Nennwert erreicht.

9. Zweiwellen-Gasturbine nach Anspruch 8, wobei ein Inverter als der Generatormotor (23) verwendet wird.

10. Zweiwellen-Gasturbine nach einem der Ansprüche 2 bis 9, die ferner Folgendes umfasst:
eine Einlassleitschaufel (1), die an einem Einlass des Verdichters (11) montiert ist;
wobei die Steuereinheit (24) die Luftmenge basierend auf dem Öffnungsgrad der Einlassleitschaufel (1) berechnet.

11. Zweiwellen-Gasturbine nach einem der Ansprüche 2 bis 9, die ferner Folgendes umfasst:
ein Thermometer (5) zum Messen der Temperatur des Abgases der Niederdruckturbine (14);
wobei die Steuereinheit (24) die Einlasstemperatur der Hochdruckturbine (13) basierend auf einem Messwert des Thermometers (5) berechnet.

12. Verfahren zum Betreiben einer Zweiwellen-Gasturbine, wobei die Zweiwellen-Gasturbine einen Gasgenerator (21), der einen Verdichter (11), eine Brennkammer (12) und eine Hochdruckturbine (13) aufweist, und eine Niederdruckturbine mit festen Schaufeln, die durch das Abgas der Hochdruckturbine (13) angetrieben wird, enthält,
wobei dann, wenn entweder ein Wert der Einlasstemperatur der Hochdruckturbine (13) oder ein Wert einer Luftmenge des Verdichters (11) einen Nennwert erreicht, bevor der andere Wert einen Nennwert erreicht, eine Last auf den Gasgenerator (21) eingestellt wird, um den anderen Wert derart in die Nähe des Nennwerts zu bringen, dass sowohl die Einlasstemperatur der Hochdruckturbine (13) als auch die Luftmenge des Verdichters (11) bei Nennbetrieb den jeweiligen Nennwert gleichmäßig erreichen.

## Revendications

1. Turbine à gaz à deux arbres, comprenant :
un générateur de gaz (21) ayant un compresseur (11), un dispositif de combustion (12) et une turbine à haute pression (13) ;
une turbine à basse pression à aubes fixes, entraînée par les gaz d'échappement depuis la turbine à haute pression (13) ; et
un dispositif d'ajustement de charge connecté au générateur de gaz (21);
**caractérisée par**
une unité de commande (24) qui, lorsque l'une ou l'autre d'une valeur de la température d'entrée de la turbine à haute pression (13) et une valeur d'une quantité d'air du compresseur (11) atteint une valeur nominale avant que l'autre valeur atteigne une valeur nominale, est adaptée à entraîner le dispositif d'ajustement de charge pour amener l'autre valeur proche de la valeur nominale, d'une manière telle que la température d'entrée de la turbine haute pression (13) et la quantité d'air du compresseur (11) atteignent toutes les deux les valeurs nominales respectives pendant un fonctionnement nominal.

2. Turbine à gaz à deux arbres selon la revendication 1,
dans laquelle le dispositif d'ajustement de charge est un générateur, et l'unité de commande (24) délivre un ordre de génération de puissance au générateur si la quantité d'air du compresseur (11) atteint la valeur nominale.

3. Turbine à gaz à deux arbres selon la revendication 1,
dans laquelle le dispositif d'ajustement de charge est un compresseur de carburant (25), et
l'unité de commande (24) entraîne le compresseur de carburant (25) si la quantité d'air du compresseur (11) atteint la valeur nominale.

4. Turbine à gaz à deux arbres selon la revendication 1,
dans laquelle le dispositif d'ajustement de charge est une valve d'ajustement d'un débit d'air de purge (27) installée dans une tubulure de purge (28) qui purge de l'air comprimé depuis le compresseur (11), et
l'unité de commande (24) augmente le degré d'ouverture de la valve d'ajustement du débit d'air de purge (27) quand la quantité d'air du compresseur (11) atteint la valeur nominale.

5. Turbine à gaz à deux arbres selon la revendication 4,
dans laquelle la tubulure de purge (27) est connectée à une portion d'entrée de la turbine à basse pression (14).

6. Turbine à gaz à deux arbres selon la revendication 1,
dans laquelle le dispositif d'ajustement de charge est un moteur électrique, et
l'unité de commande (24) délivre un ordre de puissance au moteur électrique si la température d'entrée de la turbine à haute pression (13) atteint la valeur nominale.

7. Turbine à gaz à deux arbres selon la revendication 6,
dans laquelle un moteur électrique de démarrage sert également de moteur électrique.

8. Turbine à gaz à deux arbres selon la revendication 1,
dans laquelle le dispositif d'ajustement de charge est un moteur générateur (23), et
l'unité de commande (24) délivre un ordre de génération de puissance au moteur générateur (23) quand la quantité d'air du compresseur (11) atteint la valeur nominale, et délivre un ordre de puissance au moteur générateur (23) quand la température d'entrée de la turbine à haute pression (13) atteint la valeur nominale.

9. Turbine à gaz à deux arbres selon la revendication 8, dans lequel un inverseur est utilisé à titre de moteur générateur (23).

10. Turbine à gaz à deux arbres selon l'une quelconque des revendications 2 à 9, comprenant en outre :
une aube guide d'entrée (1) installée à une entrée du compresseur (11) ;
dans laquelle l'unité de commande (24) calcule la quantité d'air sur la base du degré d'ouverture de l'aube guide d'entrée (1).

11. Turbine à gaz à deux arbres selon l'une quelconque des revendications 2 à 9, comprenant en outre :
un thermomètre (5) pour mesurer la température des gaz d'échappement de la turbine à basse pression (14) ;
dans laquelle l'unité de commande (24) calcule la température d'entrée de la turbine à haute pression (13) sur la base d'une valeur de mesure du thermomètre (5).

12. Procédé pour le fonctionnement d'une turbine à gaz à deux arbres, la turbine à gaz à deux arbres incluant un générateur de gaz (21) ayant un compresseur (11), un dispositif de combustion (12) et une turbine à haute pression (13), et une turbine à basse pression à aubes fixes entraînée par les gaz d'échappement depuis la turbine à haute pression (13),
dans lequel, quand l'une ou l'autre d'une valeur de la température d'entrée de la turbine à haute pression (13) et d'une valeur d'une quantité d'air du compresseur (11) atteint une valeur nominale avant que l'autre valeur atteigne une valeur nominale, une charge sur le générateur de gaz (21) est ajustée pour amener l'autre valeur proche de la valeur nominale, d'une manière telle que la température d'entrée de la turbine à haute pression (13) et la quantité d'air du compresseur (11) atteignent toutes deux les valeurs nominales respectives même pendant un fonctionnement nominal.
